# EUROPÄISCHE PATENTSCHRIFT

(11) **EP 1 038 038 B1**
(45) Veröffentlichungstag und Bekanntmachung des Hinweises auf die Patenterteilung: **08.05.2002**
(21) Anmeldenummer: 98962432.5
(22) Anmeldetag: 09.12.1998
(51) Int. Cl.: C21B 13/06, C21B 13/10, F27B 9/18

(54) **VERFAHREN ZUM HERSTELLEN VON DIREKT REDUZIERTEM EISEN IN EINEM ETAGENOFEN**
METHOD FOR PRODUCING DIRECTLY REDUCED IRON IN A MULTIPLE HEARTH FURNACE
PROCEDE DE PRODUCTION DE FER DIRECTEMENT REDUIT DANS UN FOUR A ETAGES

(30) Priorität: 10.12.1997 LU 90182; 29.01.1998 LU 90206; 04.02.1998 LU 90212
(43) Veröffentlichungstag der Anmeldung: 27.09.2000
(73) Patentinhaber: PAUL WURTH S.A., 1122 Luxembourg (LU)
(72) Erfinder: FRIEDEN, Romain, L-6235 Beidweiler (LU); HANSMANN, Thomas, D-54296 Trier (DE); SOLVI, Marc, L-3961 Ehlange/Mess (LU)
(74) Vertreter: Kihn, Pierre Emile Joseph
(86) Internationale Anmeldenummer: EP9808005
(87) Internationale Veröffentlichungsnummer: WO9929910

(56) Entgegenhaltungen:
- DE-B- 1 225 673
- FR-A- 913 032
- US-A- 2 089 782
- US-A- 2 333 111
- US-A- 4 702 694

## Beschreibung

Die vorliegende Erfindung betrifft ein Verfahren zum Herstellen von direkt reduziertem Eisen in einem Etagenofen.

Die Herstellung von direkt reduziertem Eisen geschieht in einem Direktreduktionsverfahren durch Reduktion von Eisenoxid mit festen oder gasförmigen Reduktionsmitteln. Als festes Reduktionsmittel dient dabei zum Beispiel ein Kohlenstoffträger, der bei höheren Temperaturen mit Kohlendioxid reagiert und das Reduktionsgas CO bildet.

Ein solches Verfahren kann zum Beispiel in einem Drehherdofen durchgeführt werden, d.h. in einem Ofen mit einem drehbaren ringförmigen Ofenboden, der auf der Oberseite mit feuerfestem Material ausgekleidet ist und der von einer Einhausung umgeben ist. An der Oberseite der Einhausung sind Brenner angebracht, die die Einhausung durchdringen und das Innere der Einhausung auf die erforderliche Reaktionstemperatur von über 1000°C aufheizen.

Das Eisenoxid wird zusammen mit dem Reduktionsmittel an einer bestimmten Stelle auf den Drehherd aufgebracht und gelangt durch die Rotation des Drehherds in das Innere der Einhausung, wo es aufgrund der hohen Temperaturen mit dem Reduktionsmittel reagiert, um nach ca. einer Umdrehung des Drehherds als direkt reduziertes Eisen vorzuliegen. Bei diesem Verfahren müssen das Eisenoxyd und das Reduktionsmittel, nach dem Chargieren auf die feuerfeste Auskleidung des Drehherdes, zunächst auf die erforderliche Reaktionstemperatur erwärmt werden, bevor die eigentliche Reduktionsreaktion beginnen kann. Dies geschieht in dem, in Drehrichtung an die Chargierzone des Drehofens angrenzenden Bereich, durch Wärmeübergang von den heißen Abgasen der Brenner auf die chargierten Materialien.

Aufgrund der geringen thermischen Leitfähigkeit der chargierten Materialien nimmt die Aufwärmphase bis zum Erreichen der erforderlichen Reaktionstemperatur innerhalb der chargierten Materialschichten eine beträchtliche Zeit in Anspruch. Je länger die Aufwärmphase, desto geringer ist die Produktivität des Drehherdofens, da die Erwärmungsgeschwindigkeit die Drehgeschwindigkeit des Drehherds bestimmt.

Der Reduktionsprozeß hängt von der Konzentration der Reduktionsgase, die im Kontakt mit dem Erz sind, ab. Die Gaszusammensetzung in den einzelnen Ofenzonen kann jedoch kaum beeinflußt werden, weil der gesamte Ofen nur aus einem Prozeßraum besteht. In den herkömmlichen Verfahren können somit die Diffusion vom CO aus dem Reduktionsmittel zum Erz und CO₂ vom Erz zum Reduktionsmittel nicht beeinflußt werden.

Ab einem gewissen Metallisierungsgrad nimmt die Geschwindigkeit des Reduktionsprozesses derart ab, daß üblicherweise der Prozeß bei Erreichen von einem Metallisierungsgrad von 85-95% abgebrochen wird. Um die restlichen Oxide zu reduzieren, wäre eine unwirtschaftliche Verlängerung der Prozeßzeit erforderlich.

Das Dokument DE 1 225 673 betrifft ein Verfahren zur trockenen Reduktion von Eisenerz in einem Etagenofen, der mehrere übereinanderliegende Etagen aufweist. Das Eisenerz wird auf die oberste Etage aufgetragen und nach und nach auf die unteren Etagen transferiert. In den unteren Etagen (Reduktionsetagen) wird ein Reduktionsgas eingegeben, um das Eisenerz zu reduzieren. In den oberen Etagen wird das Eisenerz bis auf die erforderliche Reduktionstemperatur durch Verbrennen des steigenden Reduktionsgases vorgewärmt. Vor der Einführung in den Etagenofen kann dem Eisenerzes ein festes Reduktionsmittel beigemischt werden. Ein Teil des Reduktionsgases aus mindestens einer der oberen Reduktionsetagen wird abgezogen und in zumindest eine der unteren Reduktionsetagen zugeführt.

Aus dem Dokument US 2,089,782 ist ein Verfahren zum Herstellen von Eisenschwamm in einem Etagenofen, der mehrere übereinanderliegende Etagen aufweist, bekannt. Das Eisenerz wird auf die oberste Etage aufgetragen und nach und nach auf die unteren Etagen transferiert. Festes Reduktionsmittel wird auf eine der darunterliegenden Etagen aufgetragen. Die Reduktion des Eisenerzes erfolgt in den unteren Etagen (Reduktionsetagen). Die für die

Reduktion erforderliche Wärmeenergie wird von einer elektrisch erhitzen Schmelze geliefert, die unter der untersten Etage des Etagenofens vorgesehen ist. In den oberen Etagen wird das Eisenerz durch Verbrennen des aus den Reduktionsetagen aufsteigenden Reduktionsgases vorgewärmt.

Aufgabe der vorliegenden Erfindung ist es folglich, ein alternatives Verfahren zum Herstellen von direkt reduziertem Eisen vorzuschlagen.

Diese Aufgabe wird erfindungsgemäß gelöst durch ein Verfahren zum Herstellen von direkt reduziertem Eisen in einem Etagenofen, welcher mehrere übereinanderliegende Etagen aufweist und wobei eine hohe Temperatur in den unteren Etagen herrscht, in dem
Erz kontinuierlich in den Etagenofen eingebracht wird und auf die oberste Etage aufgetragen wird und nach und nach auf die unteren Etagen transferiert wird;
kohlenstoffhaltiges Reduktionsmittel im Überschuss auf die oberste und/oder auf eine der darunterliegenden Etagen aufgetragen;
ein sauerstoffhaltiges Gas durch die untere Hälfte der Seitenwände in dem Reduktions bereich eingegeben wird und mit einem Teil des im Überschuss aufgetragenen kohlenstoffhaltigen Reduktionsmittels reagiert um Reduktionsgas zu bilden, wobei das Reduktionsgas mit dem Erz reagiert um direkt reduziertes Eisen zu bilden;
das direkt reduzierte Eisen zusammen mit Rückständen von Reduktionsmitteln im Bereich der untersten Etage des Etagenofens ausgetragen wird.

Ein wesentlicher Vorteil der Erfindung besteht darin, daß der Prozeßraum in verschiedene Zonen unterteilt ist, daß die Feststoffe sich kontinuierlich von oben nach unten und die Gase sich von unten nach oben bewegen. Durch die Unterteilung des Prozeßraums in verschiedene Zonen kann man die Prozeßbedingungen in den verschiedenen Zonen oder sogar pro Etage messen und gezielt beeinflussen.

Als Reduktionsmittel kommen feste, flüssige oder gasförmige Reduktionsmittel in Frage.

In diesem Verfahren kann feinkörniges Erz aufgegeben werden und durch eine gezielte Prozeßführung und durch dauerndes Umwälzen ein Zusammenbacken vermieden werden. Dies ist von besonderem Vorteil, wenn aschebildende Reduktionsmittel eingesetzt werden. Das Trennen der Asche der Reduktionsmittel vom Eisen ist leicht durchführbar. Diese Abtrennung kann z. B. im heißen Zustand über Klassierung erfolgen. Nach einer teilweisen Abkühlung unter 700°C ist es andererseits möglich, das direkt reduzierte Eisen über Magnetabscheider von der Asche und überschüssigem Reduktionsmittel zu trennen. Dieses Verfahren kann deshalb eingesetzt werden, weil durch das dauernde Umrühren im Etagenofen ein Zusammenbacken des Eisens verhindert wird. Das direkt reduzierte Eisen fällt demnach feinkörnig an und wird leicht von den Magnetabscheidern aufgenommen. Die Qualität des so gewonnenen direkt reduzierten Eisens ist unabhängig von der Menge der Rückstände des Reduktionsmittels.

Das gewonnene Eisen kann anschließend zu Pellets oder Briketts verarbeitet werden oder direkt in einen Einschmelzofen (Elektroofen usw.) eingebracht und weiterverarbeitet werden.

Die anfallenden Rückstände, nach dem das Eisen abgetrennt wurde, werden, falls gewünscht, mit den eventuell darin enthaltenen unverbrauchten Reduktionsmitteln in Brennern verbrannt und die dadurch entstandene Wärme dem Ofen zugeführt.

Man kann demnach ein preiswerteres Reduktionsmittel, das einen relativ hohen Aschegehalt aufweist, benutzen und / oder mit einem relativ hohen Überschuß an Reduktionsmitteln arbeiten.

Im Fall in dem mit einem Überschuß an Reduktionsmitteln gearbeitet wird, ist es vorteilhaft, die Rückstände aufzubereiten, um die unverbrauchten Reduktionsmittel abzutrennen und wieder zu verwenden. Dies kann z. B. durch Sieben der Rückstände erfolgen, wenn die unverbrauchten Reduktionsmittel in ausreichend grober Form vorliegen. Die unverbrauchten Reduktionsmittel können direkt in den Etagenofen eingebracht werden.

Das Chargieren von Reduktionsmitteln kann aber auch in mehrere Stufen aufgeteilt werden.

So besteht die Möglichkeit, daß grobkörnige Reduktionsmittel (1-3 mm) weiter oben in den Etagenofen eingebracht werden und feinkörnige Reduktionsmittel (< 1 mm) weiter unten zugegeben werden. Dadurch wird ein Austragen von Staub mit den Abgasen weitgehend vermieden und der Ablauf der Reaktion durch die weiter unten eingebrachten feinen Reduktionsmittelpartikel beschleunigt.

Durch das Chargieren von gröberen Partikeln wird der Verbrauch an Reduktionsmitteln verringert, denn in den oberen Etagen werden die kleinen Partikel schneller über Abgase verbraucht als es für die Reduktion des Eisenerzes nötig ist.

Gemäß einer bevorzugten Ausführung wird das Erz durch die heißen Abgase des Etagenofens getrocknet und eventuell vorgewärmt, bevor es in den Etagenofen eingebracht wird und mit dem Reduktionsmittel in Kontakt kommt. Das Erz wird dabei auf eine Temperatur von mindestens 200°C, vorzugsweise auf mindestens 350°C, erhitzt. Hierbei sollte die Aufheiz- und Trockenzeit nicht mehr als 10 bis 20 Minuten dauern, um ein Verkleben des Erzes in reduzierender Atmosphäre zu vermeiden.

Das Erz kann aber auch mit - mindestens einem Teil der benötigten - Reduktionsmitteln vermischt werden, bevor es in den Etagenofen eingebracht wird.

Durch gezieltes Zugeben von Reduktionsmitteln in den unteren Etagen des Ofens können die Reduktionsgase im Ofen auf eine optimale Konzentration eingestellt werden und somit kann ein besserer Metallisierungsgrad erreicht werden.

Alle aufsteigenden Gase, inklusive der flüchtigen Bestandteile der Reduktionsmittel, können im oberen Teil des Ofens bzw. außerhalb des Etagenofens, in der Trocknungsanlage für das Erz und gegebenenfalls für die Reduktionsmittel, komplett verbrannt werden und die Restwärme der Abgase des Ofens kann hierdurch optimal genutzt werden.

Das Erz wird kontinuierlich von Rechen, die auf jeder Etage des Ofens angebracht sind, umgewälzt und nach und nach auf die darunterliegende Etage befördert. Das Reduktionsmittel wird durch die Rechen schnell unter das Erz gemischt und schnell auf Reaktionstemperatur aufgeheizt. Durch das dauernde Umwälzen wird ein Zusammenbacken der Reduktionsmittel und des Erzes verhindert. Die Umwälzgeschwindigkeit hängt von vielen Faktoren wie z. B. der Geometrie der Rechen, der Dicke der Schichten usw. ab. Das Erz, das eventuell vorhandene Reduktionsmittel und das direkt reduzierte Eisen auf den Etagen sollten mindestens einmal pro ein bis drei Minuten umgewälzt werden, wodurch eine Agglomeration weitgehend verhindert wird.

Es besteht die Möglichkeit, sauerstoffhaltige Gase gezielt auf der Etage einzublasen, wo der Wärmebedarf durch Verbrennen der überschüssigen Prozeßgase abgedeckt werden muß.

Dabei ist es vorteilhaft, sauerstoffhaltige Gase zu verwenden, die eine Temperatur von mindestens 350°C haben.

Auf den untersten Etagen des Etagenofens kann zusätzlich ein gasförmiges Reduktionsmittel eingeblasen werden. Hierdurch wird eine vollständigere Reduzierung des Erzes erreicht.

Gemäß einer weiteren vorteilhaften Ausführung werden eine oder mehrere Etagen im Ofen, die unterhalb der Etage liegen, auf die die Reduktionsmittel eingebracht werden, mittels Brenner aufgeheizt .

Um die Konzentration an Reduktionsgasen im unteren Teil des Ofens nicht durch Rauchgase der Beheizung zu vermindern, kann hier auch indirekt d.h. durch eine Strahlungsbeheizung Energie zugeführt werden.

Gemäß einer anderen bevorzugten Ausführung werden an einer oder mehreren Etagen Gase aus dem Etagenofen abgesaugt. Diese heißen Gase können anschließend entweder durch einen CO₂-Wäscher geleitet werden, um die Gasmenge zu verringern und das Reduktionspotential des Gases zu erhöhen oder aber durch einen zusätzlichen Reaktor geleitet werden, in dem sich Kohlenstoff befindet, so daß das in den heißen Gasen enthaltene Kohlendioxyd mit dem Kohlenstoff reagiert um Kohlenmonoxid zu bilden gemäß dem Boudoirschen Gleichgewicht und dadurch das Reduktionspotential des Gases erhöht wird. Die an Kohlenmonoxid angereicherten Gase werden anschließend zurück in den Etagenofen geleitet.

Additive werden, falls nötig, auf eine der Etagen eingebracht, die unterhalb der Etage liegt, wo die Reduktionsmittel eingeführt werden.

In einem solchen Fall ist es vorteilhaft, auf einer Etage, die oberhalb der Etage liegt, auf der die Additive eingebracht werden, Gase abzusaugen.

Unterhalb einer bestimmten Etage werden, gemäß einer bevorzugten Ausführung, Gase aus dem Etagenofen abgesaugt und anschließend oberhalb dieser Etage wieder in den Ofen eingeblasen. Auf dieser Etage kann schwermetallhaltiger Eisenoxidstaub oder schwermetallhaltiger Eisenoxidschlamm in den Ofen eingebracht werden, die Schwermetalloxide werden dort reduziert, die Schwermetalle verflüchtigen sich und die Gase, die auf dieser Etage entstehen, werden dann separat abgesaugt.

Zu einer weiteren Erhöhung der Produktivität kann der Etagenofen unter einem bestimmten Überdruck gefahren werden. Dies ist im Gegensatz zu einem Drehofen, der über Wassertassen mit einem Durchmesser von zirka 50 m abgedichtet ist, bei einem Etagenofen, der nur kleine Abdichtungen an der Antriebswelle hat, sehr einfach zu realisieren. In einem solchen Fall müssen Druckschleusen für die Eingabe und die Ausfuhr von Material vorgesehen werden.

Im folgenden wird nun eine Ausgestaltung der Erfindung anhand der beiliegenden Figuren beschrieben. Es zeigen:
- Fig.1:: einen Schnitt durch einen Etagenofen zur Herstellung von direkt reduziertem Eisen,
- Fig.2:: einen Schnitt durch eine alternative Ausführung des Etagenofens zur Herstellung von direkt reduziertem Eisen.

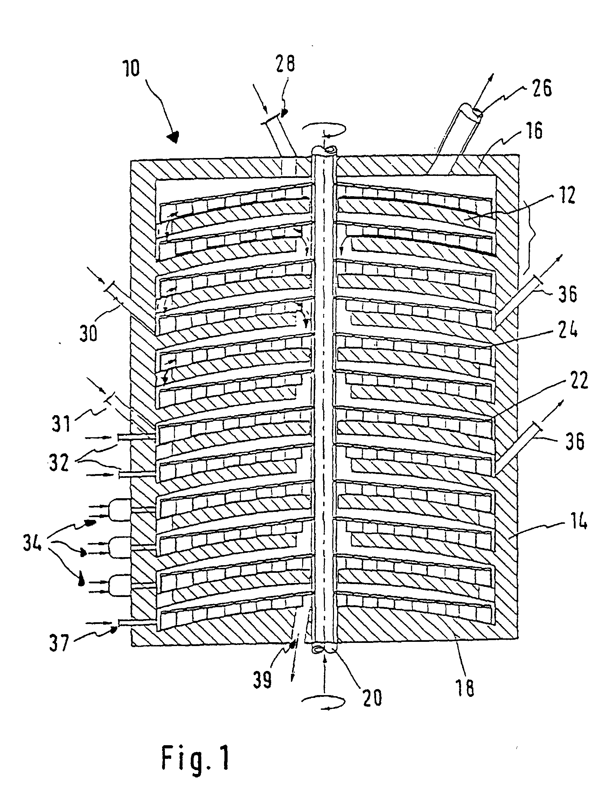

Die Fig. 1 zeigt einen Schnitt durch einen Etagenofen 10, der mehrere - in diesem Fall elf - übereinander liegende Etagen 12 aufweist. Diese freitragenden Etagen 12, sowie der Mantel 14, Deckel 16 und der Boden 18 des Ofens sind aus feuerfestem Material.

In der Mitte des Ofens ist eine Welle 20 angebracht, an der Rechen 22 befestigt sind, die über die jeweiligen Etagen ragen.

Die Rechen 22 sind so ausgelegt, daß sie das Material auf einer Etage spiralförmig von innen nach außen und dann auf der darunterliegenden Etage von außen nach innen wälzen, um so das Material von oben nach unten durch den Ofen zu transportieren.

Das Erz kann entweder getrennt oder zusammen mit den Reduktionsmitteln in den Ofen eingetragen werden. Dabei kann das Erz außerhalb des Ofens getrocknet werden und mit den Reduktionsmitteln vermischt werden und gemeinsam auf die oberste Etage aufgetragen werden, das Erz und die Reduktionsmittel können aber auch getrennt in den Ofen eingebracht werden und auf der ersten Etage und/oder auf eine der daruntergelegenen Etagen mit den Reduktionsmitteln in Kontakt gebracht werden.

Nachdem das Erz auf die erste Etage aufgetragen ist, wird es von den Rechen 22 umgewälzt und zum Rand der Etage befördert, von wo es durch mehrere hierfür vorgesehene Öffnungen auf die darunterliegende Etage fällt. Von dort wird das Erz zur Mitte der Etage befördert und fällt dann auf die darunterliegende Etage. Während dieser Zeit wird das Erz durch den Kontakt mit der Etage und den aufsteigenden warmen Gasen auf ungefähr 600°C bis 1000°C erhitzt.

Die Welle 20 und die Rechen 22 sind luftgekühlt und an den Rechen sind Öffnungen 24 vorgesehen, durch die die Luft in das Innere des Ofens strömen kann und dort zur Nachverbrennung genutzt werden kann.

Im Deckel 16 des Ofens 10 ist ein Abzug 26 vorgesehen, durch den die Gase aus dem Ofen evakuiert werden können und eine Öffnung 28, durch die das Erz auf die oberste Etage aufgetragen werden kann.

In den Seitenwänden des Ofens 10 ist - normalerweise im oberen Drittel - mindestens eine Einlaßöffnung 30 angebracht, durch die Reduktionsmittel in den Ofen eingetragen werden können . Diese Reduktionsmittel können sowohl gasförmig als auch in flüssiger oder fester Form vorliegen. Bei den Reduktionsmitteln handelt es sich um Kohlenmonoxid, Erdgas, Erdöl und Erdölderivate, oder um feste Kohlenstoffträger, wie z.B. um Braunkohlekoks, Petrolkoks, Hochofenstaub, Kohle, o.ä.. Der Kohlenstoffträger, der auf eine weiter unten im Ofen 10 liegende Etage eingebracht wird, wird dort durch die Rechen 22 mit dem erhitzten Erz vermischt. Durch die hohe Temperatur und durch die Gegenwart von Kohlenmonoxid wird das im Erz enthaltene Eisenoxid während des Transportes durch den Etagenofen 10 nach und nach zu metallischem Eisen reduziert.

In der unteren Hälfte der Seitenwand sind Düsen 32 zum Einblasen von heißen (350°C bis 500°C) sauerstoffhaltigen Gasen vorgesehen, durch die man Luft oder ein anderes sauerstoffhaltiges Gas in den Ofen 10 eingeben kann. Durch die hohen Temperaturen und durch die Gegenwart von Sauerstoff verbrennt ein Teil des Kohlenstoffs zu Kohlendioxid, der wiederum mit dem im Überschuß vorhandenen Kohlenstoff reagiert und zu Kohlenmonoxid umgewandelt wird. Das Kohlenmonoxid reduziert schließlich das Eisenoxid zu metallischem Eisen. Da diese Reaktion überwiegend endotherm ist, ist es sinnvoll, im unteren Teil des Ofens Brenner 34 anzubringen, die eine gleichbleibend hohe Temperatur in den untersten Etagen des Ofens sicherstellen. Hier können Gas- oder Kohlenstaubbrenner eingesetzt werden.

Diese Brenner 34 können zur Vorheizung und/oder zum Zusatzheizen mit Gas oder Kohlenstaub mit Luft befeuert werden. Durch das Mengenverhältnis zwischen Sauerstoff und Brennmaterial kann ein zusätzliches Reduktionsgas erzeugt werden oder bei Luftüberschuß wird ein Nachverbrennen der Prozeßgase erreicht. Im Falle einer Kohlenstaubfeuerung kann im Brenner ein Überschuß an Kohlenmonoxid erzeugt werden. Bei außenliegenden Brennkammern kann vermieden werden, daß die Asche der verbrannten Kohle in den Ofen gelangt und sich mit dem direkt reduzierten Eisen vermischt. Die Temperaturen in den Brennkammern werden so gewählt, daß die anfallende Schlacke flüssig abgezogen werden kann und in verglaster Form entsorgt werden kann. Durch die Erzeugung von Kohlenmonoxid wird der Verbrauch an festen Kohlenstoffträgern im Ofen 10 reduziert und somit auch der Aschegehalt im fertigen Produkt.

In der Seitenwand des Ofens sind auf der Höhe der mittleren Etage Öffnungen 36 vorgesehen, durch die heiße Gase aus dem Ofen entnommen werden können.

In der letzten oder in den beiden letzten Etagen ist die Zugabe eines gasförmigen Reduktionsmittels, z.B. Kohlenmonoxid oder Wasserstoff durch spezielle Düsen 37, vorgesehen. In dieser Atmosphäre mit erhöhtem Reduktionspotential kann die Reduktion des Erzes vervollständigt werden.

Anschließend wird das direkt reduzierte Eisen durch den Auslaß 39 im Boden 18 des Ofens 10 zusammen mit der Asche der Reduktionsmittel ausgetragen.

Durch die kontrollierte Eingabe von festen, flüssigen und gasförmigen Reduktionsmitteln und von sauerstoffhaltigen Gasen an verschiedenen Stellen des Etagenofens 10 und durch die Möglichkeit, überschüssige Gase an kritischen Stellen abzusaugen, ist es möglich, die Reduktion des Erzes genau zu kontrollieren und das Verfahren unter optimalen Bedingungen durchzuführen.

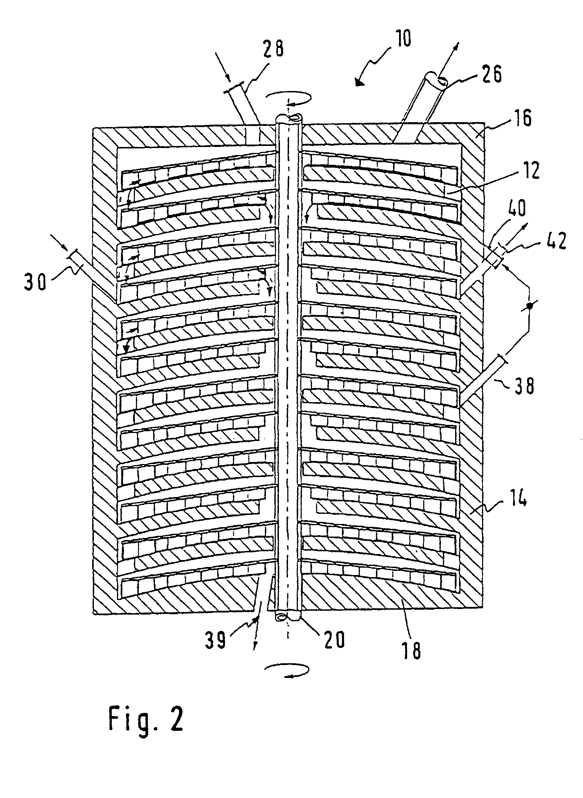

Die in der Fig. 2 dargestellte Ausführungsform erlaubt es, zusätzlich zur Herstellung von direkt reduziertem Eisen gemäß A. 1, auch noch verschiedene Problemabfälle, wie z.B. kontaminierte eisenhaltige Stäube zu verwerten.

So können kontaminierte eisenoxidhaltige Stäube aus Elektro- oder Konverterstahlwerken, die ja kaum Kohlenstoff enthalten, zusammen mit dem Erz durch die Öffnung 28 im Deckel 16 in den Etagenofen 10 eingegeben werden. Eisenoxidhaltige Stäube, die Kohlenstoff in größeren Mengen enthalten, wie z.B. ölhaltige Rückstände aus den Walzwerken oder Staub bzw. Schlämme aus der Abgasreinigung von Hochöfen, können durch eine spezielle Öffnung 31 in den Ofen 10 eingebracht werden.

Da diese kohlenstoff- und eisenoxidhaltigen Produkte oft durch Schwermetall verseucht sind, kann man einen Großteil der Gase, die im Ofen nach oben strömen unterhalb der Etage, auf die die kohlenstoffhaltigen Eisenoxidstäube aufgetragen werden, durch einen Absaugstutzen 38 in der Seitenwand aus dem Ofen 10 absaugen und oberhalb dieser Etage durch einen Einlaß 40 wieder in den Ofen 10 einblasen. Dadurch ist die auf der Etage, auf die der Eisenstaub eingebracht wird, vorhandene Gasmenge gering. Die Schwermetalle, die in dem Eisenstaub enthalten sind, werden unmittelbar nach ihrer Einbringung in den Ofen reduziert und verflüchtigen sich. Sie können dann in einer relativ geringen Gasmenge auf dieser Etage durch einen Auslaß 42 in der Seitenwand aus dem Ofen 10 abgesaugt werden. Das geringe Volumen an Gas mit relativ hohem Gehalt an Schwermetall kann dann getrennt gereinigt werden. Durch die geringen Abgasmengen ergeben sich auf den entsprechenden Etagen niedrige Gasgeschwindigkeiten und so wird wenig Staub mit diesem Abgas ausgetragen. Dadurch ergibt sich eine sehr hohe Schwermetallkonzentration im Abgas.

Das in den Stäuben enthaltene Eisenoxid wird mit dem eingegebenen Erz zu Eisen reduziert.

### ZEICHENLISTE

Etagenofen 10
Etagen 12
Mantel 14
Deckel 16
Boden 18
Welle 20
Rechen 22
Öffnungen 24 im Rechen 22
Abzug 26
Öffnung 28 für das Erz
Einlaßöffung 30 für die feste Reduktionsmittel
Öffnung 31
Düsen 32 zum Einblasen von heißen sauerstoffhaltigen Gasen
Brenner 34
Öffnungen 36 durch die heiße Gase aus dem Ofen entnommen werden können
Düsen 37 für gasförmiges Reduktionsmittel
Absaugstutzen 38
Einlaß 40
Auslaß 42

## Patentansprüche

1. Verfahren zum Herstellen von direkt reduziertem Eisen in einem Etagenofen, welcher mehrere übereinanderliegende Etagen aufweist und wobei eine hohe Temperatur in den unteren Etagen herrscht, in dem Erz kontinuierlich in den Etagenofen eingebracht wird und auf die oberste Etage aufgetragen und nach und nach auf die unteren Etagen transferiert wird;
kohlenstoffhaltiges Reduktionsmittel im Überschuss auf die oberste und/oder auf eine der darunterliegenden Etagen aufgetragen wird;
ein sauerstoffhaltiges Gas durch die untere Hälfte der Seitenwände, in dem Reduktionsbereich eingegeben wird und mit einem Teil des im Überschuss aufgetragenen kohlenstoffhaltigen Reduktionsmittels reagiert um Reduktionsgas zu bilden, wobei das Reduktionsgas mit dem Erz reagiert um direkt reduziertes Eisen zu bilden;
das direkt reduzierte Eisen zusammen mit Rückständen von Reduktionsmitteln im Bereich der untersten Etage des Etagenofens ausgetragen wird.

2. Verfahren nach Anspruch 1 **dadurch gekennzeichnet, daß** Brenner im unteren Teil des Etagenofens angebracht sind, die eine hohe Temperatur sichste.

3. Verfahren nach Anspruch 1 oder 2 **dadurch gekennzeichnet, daß** eine oder mehrere Etagen, die unterhalb der Etage liegen, auf die die Reduktionsmittel eingebracht werden, mittels Brennern aufgeheizt werden.

4. Verfahren nach einem der vorhergehenden Ansprüche **dadurch gekennzeichnet, daß** das Verfahren unter Überdruck ausgeführt wird.

5. Verfahren nach einem der vorhergehenden Ansprüche **dadurch gekennzeichnet, daß** Reduktionsmittel auf verschiedene Etagen des Etagenofens eingebracht werden.

6. Verfahren nach einem der vorhergehenden Ansprüche **dadurch gekennzeichnet, daß** ein Überschuß an Reduktionsmitteln in den Etagenofen eingebracht wird.

7. Verfahren nach einem der vorhergehenden Ansprüche **dadurch gekennzeichnet, daß** grobkörniges Reduktionsmittel weiter oben und feinkörniges Reduktionsmittel weiter unten in den Etagenofen eingebracht wird.

8. Verfahren nach einem der vorhergehenden Ansprüche **dadurch gekennzeichnet, daß** in der letzten untersten oder in den beiden letzten untersten Etagen ein zusätzliches gasförmiges Reduktionsmittel, z.B. Kohlenmonoxid oder Wasserstoff durch spezielle Düsen (37) zugegeben wird.

9. Verfahren nach einem der vorhergehenden Ansprüche **dadurch gekennzeichnet, daß** eventuell unverbrauchte Reduktionsmittel von den Rückständen nach dem Austragen aus dem Etagenofen getrennt werden.

10. Verfahren nach Anspruch 9 **dadurch gekennzeichnet, daß** die unverbrauchten Reduktionsmittel in außenliegenden Brennkammern verbrannt werden und die dadurch entstandene Wärme dem Etagenofen zugeführt wird.

11. Verfahren nach einem der vorhergehenden Ansprüche **dadurch gekennzeichnet, daß** eine oder mehrere Etagen des Ofens, indirekt aufheizbar sind.

12. Verfahren nach einem der vorhergehenden Ansprüche **dadurch gekennzeichnet, daß** schwermetalloxidhaltiger Eisenoxidstaub oder -schlamm in den Ofen eingebracht wird, daß dort die Oxide reduziert werden und die Schwermetalle sich verflüchtigen.

13. Verfahren nach Anspruch 12 **dadurch gekennzeichnet, daß** die verflüchtigten Schwermetalle, separat auf der Etage abgesaugt werden, wo sie entstehen.

## Claims

1. Process for production of directly reduced iron in a multi-stage furnace, which has several stages one above the other, a high temperature prevailing in the lower stages, in which
ore is continuously introduced into the multi-stage furnace and deposited on the top stage and gradually transferred to the lower stages;
carbon containing reducing agent is deposited on the topmost stage and/or on one of the stages underneath it;
a gas containing oxygen is fed through the bottom half of the side wall into the reducing zone and reacts with part of the carbon containing reducing agent provided in excess to form reducing gas, the reducing gas reacting with the ore to form directly reduced iron;
the directly reduced iron is discharged together with the residues of reducing agents in the area of the bottom stage of the multi-stage furnace.

2. Process according to claim 1, **characterised in that** burners are arranged in the lower part of the multi-stage furnace, said burners ensuring a high temperature.

3. Process according to claim 1 or 2, **characterised in that** one or more stages, which are situated underneath the stage on which the reducing agent is introduced, are heated by burners.

4. Process according to one of the preceding claims, **characterised in that** the process takes place under excess pressure.

5. Process according to one of the preceding claims, **characterised in that** reducing agents are introduced to different stages of the multi-stage furnace.

6. Process according to one of the preceding claims, **characterised in that** an excess of reducing agents is introduced into the multi-stage furnace.

7. Process according to one of the preceding claims, **characterised in that** coarse-grained reducing agent is introduced higher up and fine-grained reducing agent lower down into the multi-stage furnace.

8. Process according to one of the preceding claims, **characterised in that** an additional gaseous reducing agent, e.g. carbon monoxide or hydrogen, is fed through special nozzles (37) in the last or in the last two lower stages.

9. Process according to one of the preceding claims, **characterised in that** any unused reducing agents are separated from the residues after discharge from the multi-stage furnace.

10. Process according to claim 9, **characterised in that** the unused reducing agents are burnt in external combustion chambers and the resulting heat is fed to the multi-stage furnace.

11. Process according to one of the preceding claims, **characterised in that** one or more stages of the furnace can be heated indirectly.

12. Process according to one of the preceding claims, **characterised in that** iron oxide dust or sludge containing heavy metal oxides is introduced into the furnace, the oxides are reduced there and the heavy metals volatilise.

13. Process according to claim 12, **characterised in that** the volatilised heavy metals are exhausted separately at the stage, where they are formed.

## Revendications

1. Procédé de fabrication de fer de réduction directe dans un four à étages qui présente plusieurs étages superposés et dans lequel une température élevée règne dans les étages inférieurs, dans lequel
du minerai est introduit en continu dans le four à étages et est apporté à l'étage le plus élevé pour être transféré successivement sur les étages inférieurs;
un agent de réduction contenant du carbone est apporté en excès sur l'étage le plus élevé et/ou sur l'un des étages situé en dessous;
un gaz contenant de l'oxygène est introduit par la moitié inférieure des parois latérales dans la zone de réduction et réagit avec une partie de l'agent de réduction contenant du carbone apporté en excès pour former du gaz de réduction, le gaz de réduction réagissant avec le minerai pour former du fer de réduction directe;
le fer de réduction directe est extraite dans la région des étages les plus bas du four à étages en même temps que des résidus d'agents de réduction.

2. Procédé selon la revendication 1, **caractérisé en ce que** des brûleurs sont installés dans la partie inférieure du four à étages pour assurer une température élevée.

3. Procédé selon la revendication 1 ou 2, **caractérisé en ce qu'**un ou plusieurs étages qui sont situés en dessous des étages auxquels les agents de réduction sont apportés, sont chauffés au moyen de brûleurs.

4. Procédé selon l'une des revendications précédentes, **caractérisé en ce que** le procédé est mis en oeuvre sous surpression.

5. Procédé selon l'une des revendications précédentes, **caractérisé en ce que** des agents de réduction sont importés à différents étages du four à étages.

6. Procédé selon l'une des revendications précédentes, **caractérisé en ce qu'**un excès d'agent de réduction est introduit dans le four à étages.

7. Procédé selon l'une des revendications précédentes, **caractérisé en ce qu'**un agent de réduction à grains grossiers est apporté plus haut et un agent de réduction à grains fins est apporté plus bas dans le four à étages.

8. Procédé selon l'une des revendications précédentes, **caractérisé en ce que** dans le dernier étage, le plus bas, ou dans les deux derniers étages les plus bas, un agent de réduction gazeux supplémentaire, par exemple du monoxyde de carbone ou de l'hydrogène, est ajouté par des ajutages spéciaux (37).

9. Procédé selon l'une des revendications précédentes, **caractérisé en ce que** les agents de réduction éventuellement non consommés sont séparés des résidus après leur extraction hors du four à étages.

10. Procédé selon la revendication 9, **caractérisé en ce que** les agents de réduction non consommés sont brûlés dans des chambres de combustion extérieures, et la chaleur ainsi produite est apportée dans le four à étages.

11. Procédé selon l'une des revendications précédentes, **caractérisé en ce qu'**un ou plusieurs étages du four peuvent être chauffés de façon indirecte.

12. Procédé selon l'une des revendications précédentes, **caractérisé en ce que** de la poussière ou de la boue d'oxyde de fer contenant des oxydes de métaux lourds est apportée dans le four, **en ce que** les oxydes y sont réduits et **en ce que** les métaux lourds se volatilisent.

13. Procédé selon la revendication 12, **caractérisé en ce que** les métaux lourds volatilisés sont aspirés séparément à l'étage où ils sont produits.
